# EUROPEAN PATENT APPLICATION

(11) **EP 3 584 031 A1**
(43) Date of publication of application: **25.12.2019**
(21) Application number: 18178852.2
(22) Date of filing: 20.06.2018
(51) Int. Cl.: B23K 37/04, B23K 26/08, B23K 26/322, B65B 13/32, B65B 51/10, F16B 2/08, B23K 26/244, B23K 26/60, B23K 26/352, B23K 101/16, B23K 101/34, B23K 103/04

(54) **STRAPPING MACHINE FOR AND METHOD OF SECURING A PIECE OF COATED METAL STRAP IN A LOOP AROUND ONE OR MORE OBJECTS**

(71) Applicant: Sund Birsta AB, 85125 Sundsvall (SE)
(72) Inventor: Danielsson, Erik, SE-852 30 Sundsvall (SE)
(74) Representative: Bjerkéns Patentbyrå KB (Gävle)

(57) **Abstract**

The present application relates to a strapping machine comprising a strapping unit (20) with a laser welding device (21) for forming a welded joint between a first strap section (7a) at a leading end of a piece of metal strap (3) arranged in a loop around objects (10) to be strapped and an overlapping second strap section (7b) at a trailing end of said strap piece (3) to thereby secure it around said objects with a first surface (50) on the first strap section facing an opposite second surface on the second strap section at the welding zone. The welding device (21) is configured to direct a laser beam (23) onto said first surface when the first strap section is received in the strapping unit (20) before being fed around said objects so as to form several protuberances on the first surface that will keep said surfaces mutually separated when the strap sections are positioned in an overlapping relationship after the feeding of the strap around said objects (10).

## Description

### FIELD OF THE INVENTION AND PRIOR ART

The present invention relates to a strapping machine according to the preamble of claim 1. The invention also relates to a method for securing a piece of coated metal strap in a loop around one or more objects.

Automatic strapping machines for applying a metal strap in a loop around an object or a bundle of objects, drawing the strap tightly around the object/bundle and thereafter joining overlapping sections of the strap in order to secure the strap around the object/bundle are known in many different configurations. US 6 403 917 B1 and WO 2017/129679 A1 disclose strapping machines where laser welding is used for forming a welded joint between overlapping sections of a strap to thereby secure the strap in a loop around an object or a bundle of objects.

When a lap joint is formed between coated metal components by means of laser welding, the coating material may be vaporized in the welding zone at the interface between the components. A small gap is suitably provided between the components at the welding zone in order to allow gas formed by the vaporization of the coating material to escape through this gap and thereby prevent it from impairing the quality of the lap weld.

It is previously known, for instance from WO 99/08829 A1 and US 2009/0134131 A1, that a laser beam can be used to form a series of protuberances on a coated metal component to be joined to another component by laser welding, wherein the components are positioned in an overlapping relationship to each other with the protuberances located at the interface between the components at the intended welding zone. The protuberances keep the opposed surfaces of the components separated from each other at the welding zone and make sure that a small gap is maintained between the components at the welding zone when the components are pressed against each other during the welding operation.

### SUMMARY OF THE INVENTION

A first object of the present invention is to achieve a new and favourable strapping machine of the above-mentioned type that is suited for use when performing strapping with coated metal straps. A second object of the invention is to provide an efficient and favourable method for securing a piece of coated metal strap in a loop around one or more objects by means of a strapping machine of the above-mentioned type.

According to the invention, said first object is achieved by means of a strapping machine having the features defined in claim 1.

The strapping machine of the present invention comprises:
- a strapping unit provided with a laser welding device for forming a welded joint between a first strap section at a leading end of a piece of metal strap arranged in a loop around one or more objects to be strapped and an overlapping second strap section at a trailing end of said strap piece to thereby secure this strap piece in a loop around said one or more objects with a first surface on the first strap section facing an opposite second surface on the second strap section at the welding zone;
- a feeding device for feeding the strap through the strapping unit, in a loop around an object receiving space configured for receiving one or more objects to be strapped and then back into the strapping unit and subsequently retracting the strap to draw it tightly around one or more objects received in the object receiving space; and
- an electronic control device.
According to the invention, the electronic control device is configured to control the laser welding device to direct a laser beam onto said first surface when the first strap section is received in the strapping unit before being fed around the object receiving space so as to form several laser-produced protuberances on the first surface that will keep the first and second surfaces separated from each other when the second strap section is positioned in an overlapping relationship to the first strap section after the feeding of the strap around the object receiving space.

The invention is based on the realization that the laser welding device of a strapping machine of the above-mentioned type may be used to pretreat a surface area at the leading end of a metal strap by forming protuberances thereon before the strap is fed around the object or objects to be strapped, wherein the pretreated surface area with the protuberances will finally end up at the interface between the mutually overlapping strap sections at the intended welding zone and provide a small gap between these strap sections.

According to an embodiment of the invention, the electronic control device is configured to control the feeding device to continuously feed the first strap section forwards through the strapping unit during the formation of the protuberances on said first surface. By feeding the strap forwards during the formation of the protuberances on the first strap section, the total time required for a strapping cycle may be reduced as compared to a case when the strap is kept still during the formation of the protuberances.

Further advantageous features of the strapping machine according to the present invention will appear from the description following below and the dependent claims.

According to the invention, the above-mentioned second object is achieved by means of a method having the features defined in claim 5.

Further advantageous features of the method according to the present invention will appear from the description following below and the dependent claims.

### BRIEF DESCRIPTION OF THE DRAWINGS

With reference to the appended drawings, a specific description of embodiments of the invention cited as examples follows below. In the drawings:
- Fig 1: is an outline diagram of a strapping machine according to an embodiment of the present invention,
- Figs 2a-2i: are partly cut outline diagrams of parts included in the strapping machine of Fig 1, as seen at different stages during the process of securing a strap piece in a loop around a bundle of objects,
- Figs 3a and 3b: is a schematic planar view and lateral view, respectively, of a part of a strap provided with laser-produced protuberances in the form of dots,
- Figs 4a and 4b: is a schematic planar view and lateral view, respectively, of a part of a strap provided with laser-produced protuberances in the form of longer elongated lines,
- Fig 5: is a schematic planar view of a part of a strap provided with laser-produced protuberances in the form of shorter elongated lines,
- Fig 6: is a schematic lateral view of two strap sections before they are brought into contact with each other,
- Fig 7: is a schematic lateral view corresponding to Fig 6, as seen with the two strap sections squeezed against each other,
- Fig 8: is a planar view from above of a part of a strap secured in a loop around one or more objects to be strapped, illustrating a heating area on the strap before the strap loop has been released from the remaining part of the strap,
- Fig 9: is a planar view corresponding to Fig 8, as seen when the strap loop has been released from the remaining part of the strap,
- Fig 10: is a cut according to the line X-X in Fig 9,
- Fig 11: is a planar view from above of a part of a strap secured in a loop around one or more objects to be strapped, illustrating a break line on the strap before the strap loop has been released from the remaining part of the strap,
- Fig 12: is a cut according to the line XII-XII in Fig 11,
- Fig 13: is a planar view from above of a part of a strap secured in a loop around one or more objects to be strapped, illustrating an alternative type of break line on the strap before the strap loop has been released from the remaining part of the strap, and
- Fig 14: is a cut according to the line XIV-XIV in Fig 13.

### DETAILED DESCRIPTION OF EMBODIMENTS OF THE INVENTION

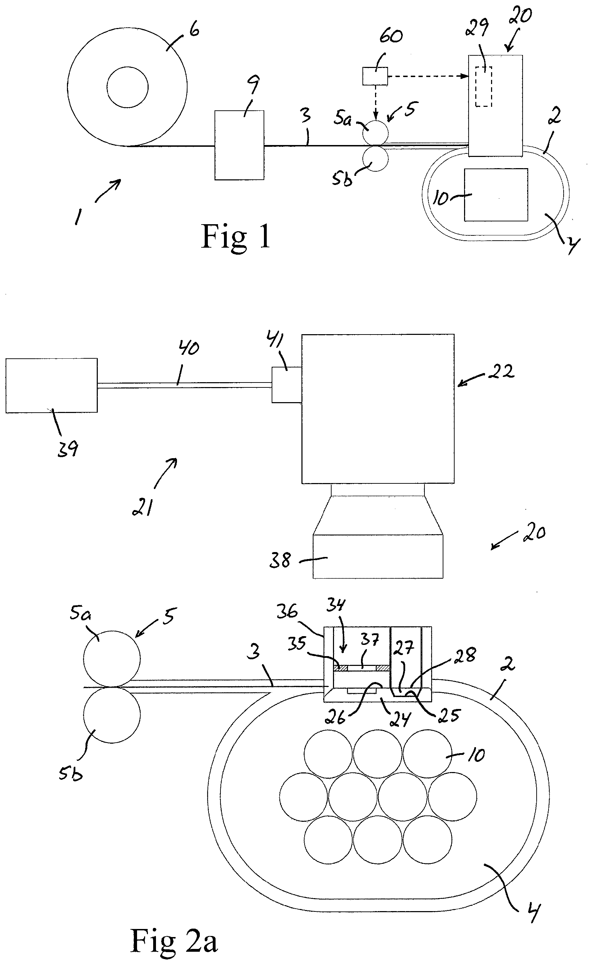

Some of the parts included in a strapping machine 1 according to an embodiment of the present invention are very schematically illustrated in Fig 1. The strapping machine 1 comprises:
- a guide track 2 for guiding an elongated strap 3 of metallic material in a loop around a space 4 configured for receiving one or more objects 10 to be strapped;
- a strapping unit 20 for securing the strap 3 around said one or more objects 10;
- a feeding device 5 for feeding the strap 3 from a supply coil 6, through the strapping unit 20, into said guide track 2, along the guide track in a loop around said object receiving space 4 and then back into the strapping unit 20 and subsequently retracting the strap 3 to draw it tightly around one or more objects 10 received in said space 4; and
- an accumulator 9 for temporarily accumulating a part of the strap 3 when the strap is retracted by the feeding device 5 and then releasing the accumulated part of the strap when the strap thereafter is fed forwards by the feeding device 5.

The guide track 2 may for instance have the form of a rail with a longitudinal opening facing said object receiving space 4. As an alternative, the strap may also be fed in a loop around the object or objects to be strapped without using any guide track. This may be accomplished by feeding the strap through a bending device that is configured to bend the strap in such a manner that it will move in free space, without contact with any guide track or the similar, in an essentially circular path around the object or objects 10 to be strapped, wherein a funnel-shaped guiding element may be arranged at the end of said path in order to catch the leading end of the strap and guide it into the strapping unit.

The object or objects 10 to be strapped may be positioned in the object receiving space 4 before, during or after the feeding of the strap 3 in a loop around this space 4.

As an alternative to the use of an accumulator 9, the slackening of the strap 3 when the strap is retracted by the feeding device 5 may be taken up or avoided by rotating the supply coil 6 in a reversed direction.

In the illustrated embodiment, the feeding device 5 comprises two rotatable feed rollers 5a, 5b, which are located opposite each other and configured to be in contact with opposite sides of a part of the strap 3 received in the nip between the feed rollers. At least one of the feed rollers 5a, 5b is rotatably driven by an actuator (not shown) in the form of a reversible drive motor in order to move the strap 3 in its longitudinal direction. The drive motor is preferably an electric motor, but it could as an alternative be a hydraulic or pneumatic motor. The feeding device 5 may also comprise any other suitable type of actuator for feeding and retracting the strap 3.

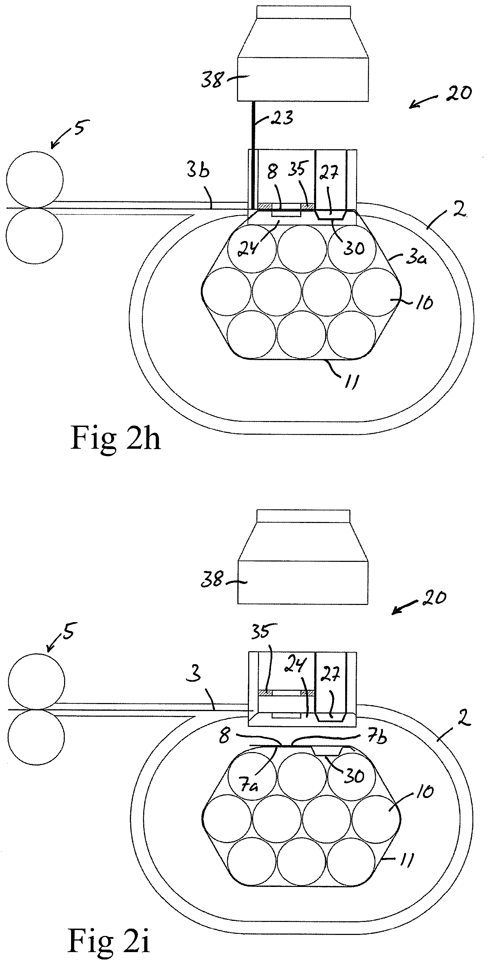

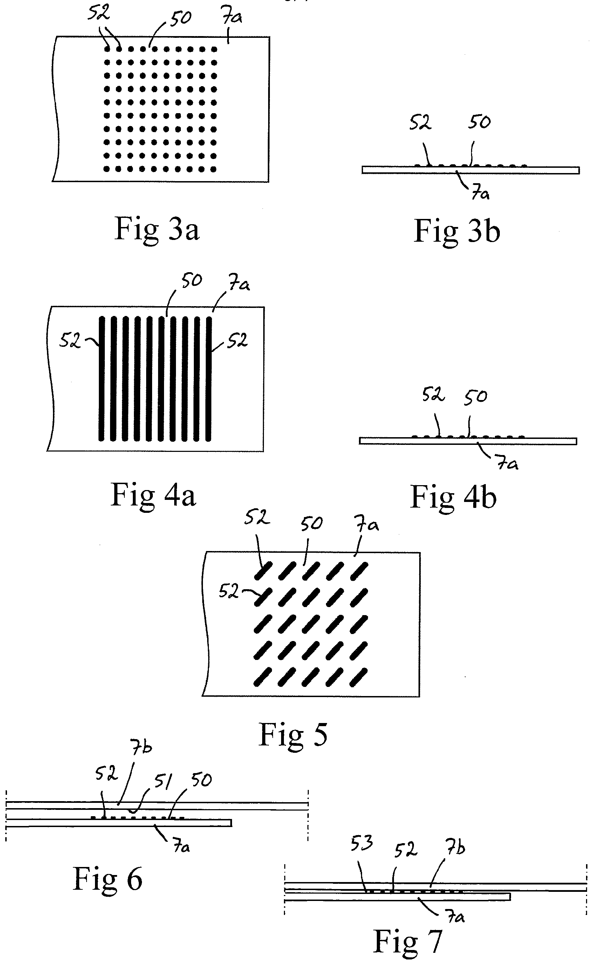

Some of the parts included in the above-mentioned strapping unit 20 are very schematically illustrated in Figs 2a-2i. The strapping unit 20 comprises a laser welding device 21 (see Fig 2a) for forming a welded joint 8 (see Figs 2h and 2i) between a first strap section 7a at a leading end of a piece 3a of metal strap arranged in a loop around one or more objects 10 to be strapped and an overlapping second strap section 7b at a trailing end of said strap piece 3a to thereby secure this strap piece 3a in a loop around said one or more objects 10. The laser welding device 21 is configured to form the welded joint 8 as a lap joint with the second strap section 7b overlapping the first strap section 7a, wherein a first surface 50 (se Figs 6 and 7) on the first strap section 7a faces an opposite second surface 51 on the second strap section 7b at the welding zone.

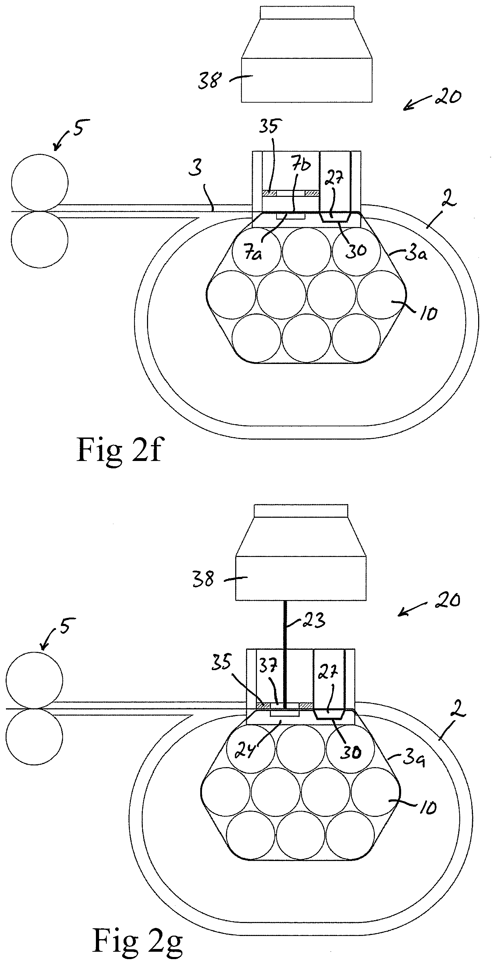

The laser welding device 21 is provided with a laser welding head 22, wherein said welded joint 8 between the first and second strap sections 7a, 7b is formed by means of a laser beam 23 (see Fig 2g) emitted from the laser welding head. The laser welding device 21 comprises means of conventional type for directing and focusing the emitted laser beam 23 onto a desired target area.

The strapping unit 20 further comprises a support member 24 for supporting said overlapping first and second strap sections 7a, 7b during the formation of the welded joint 8. The support member 24 is configured to be located between the first strap section 7a and an outer surface of the object or objects 10 to be strapped during the formation of the welded joint 8. In the illustrated embodiment, a recess 25 is provided in an upper support surface 26 on the support member 24. When the welded joint 8 has been formed, the support member 24 is moved laterally out of the area between the strapped object/objects 10 and the strap loop 11 (see Figs 2h and 2i) formed around the object/objects to thereby release the strap loop from the strapping unit 20.

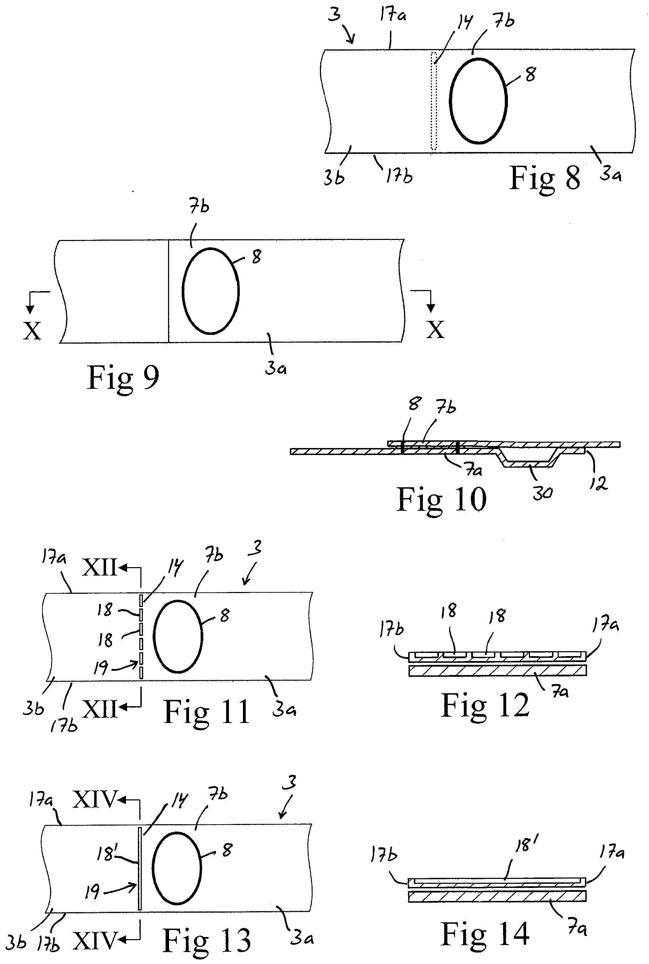

In the examples illustrated in Figs 8-13, the welded joint 8 has an elliptical shape, as seen in a planar view. However, the welded joint 8 between the overlapping strap sections 7a, 7b may of course also have any other suitable configuration.

The strapping unit 20 also comprises a pressing element 27, which has a shape adapted to the shape of the recess 25 in the support member 24 so as to allow the pressing element 27 to be received in this recess 25. The pressing element 27 has an upper surface 28 which is flush or at least essentially flush with the upper support surface 26 on the support member 24 when the pressing element 27 is received in the recess 25 in the support member, as illustrated in Fig 2a.

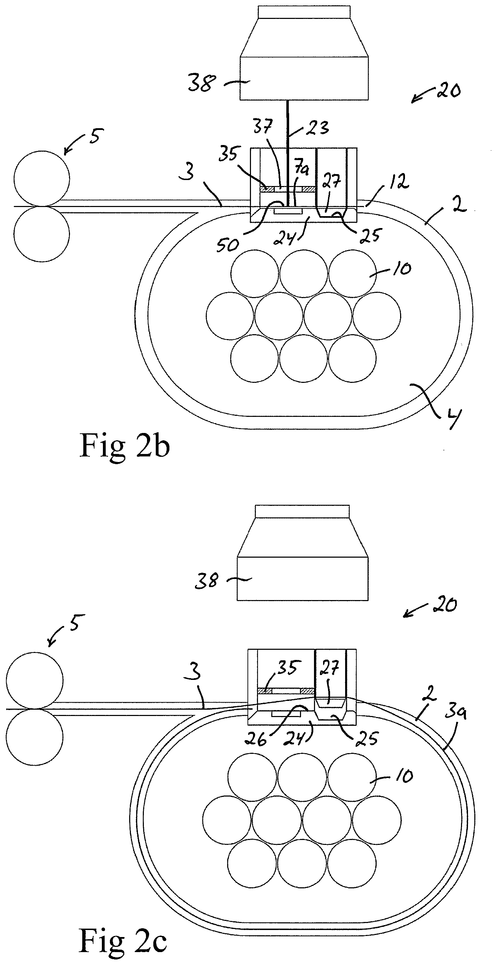

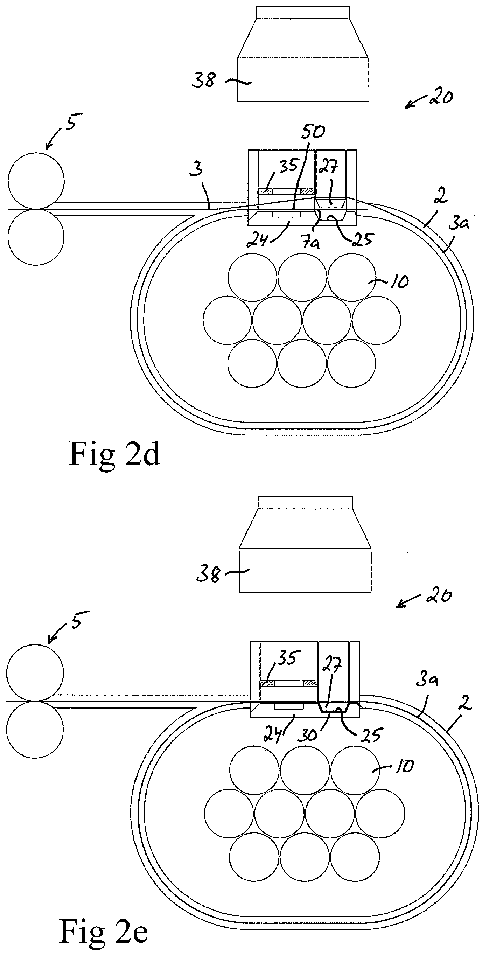

An actuating device 29 (very schematically illustrated in Fig 1) included in the strapping unit 20 is configured to move the pressing element 27 and the support member 24 in relation to each other between a first mutual position (see Figs 2c and 2d), in which the pressing element 27 is located outside and at a distance from the recess 25 in the support member 24, and a second mutual position (see Figs 2a, 2b and 2e-2h), in which the pressing element 27 is received in said recess 25. The pressing element 27 and the support member 24 are configured to form a bulge 30 (see Figs 2e-2i and 10) on the first strap section 7a by a press forming action between the pressing element 27 and the support member 24 when the pressing element 27 and the support member 24 are moved in relation to each other by the actuating device 29 from said first mutual position to said second mutual position with a part of the first strap section 7a received in the space between the pressing element 27 and the support member 24, wherein this bulge 30 is formed at a position between the leading end 12 of said strap piece 3a and the welded joint 8 to be formed by the laser welding device 21.

In the embodiment illustrated in Figs 2a-2i, the actuating device 29 is configured to achieve said relative movement between the pressing element 27 and the support member 24 by moving the pressing element 27 in relation to the support member 24. In this case, the pressing element 27 is moved downwards towards the support member 24 in order to achieve the movement from the first mutual position to the second mutual position and upwards away from the support member 24 in order to achieve the movement from the second mutual position to the first mutual position, wherein the support member 24 remains in a fixed position during the movements of the pressing element 27. As an alternative, the actuating device 29 may be configured to achieve said relative movement between the pressing element 27 and the support member 24 by moving the support member 24 in relation to the pressing element 27 or by moving the pressing element 27 as well as the support member 24 in relation to each other.

The pressing element 27 is also moveable horizontally by means of the actuating device 29 in order to allow the pressing element to be moved laterally out of the bulge 30 when the first and second strap sections 7a, 7b have been secured to each other by the laser welding device 21 and the strap loop 11 thereby formed is to be released from the strapping unit 20. According to a first alternative, the pressing element 27 is formed as a single-part element and moveable out of the bulge 30 by a displacement in a horizontal direction. According to another alternative, the pressing element 27 is divided into two parts, which are located opposite each other and moveable out of the bulge 30 by being displaced laterally in opposite directions away from each other.

The support member 24 may comprise first and second support jaws located opposite each other in the manner shown in WO 2017/129679 A1, wherein the support jaws are moveable in relation to each other between an advanced supporting position, in which the support jaws form a support for the first strap section 7a, and a retracted releasing position, in which the support jaws are retracted from each other in order to allow the first and second strap sections 7a, 7b, after having been joined to each other, to pass through a gap between the support jaws. Each support jaw may be fixed to a pivot arm, which in its turn is pivotally mounted to a housing 36 of the strapping unit 20. Thus, in this case, the support jaws are pivotable between the supporting and releasing positions. As an alternative, the support jaws could be linearly moveable between the supporting and releasing positions. The support jaws are moveable between the supporting and releasing positions by means of the actuating device 29. As an alternative, the support member 24 is formed as a single-part member and moveable between the supporting and releasing positions by a displacement in a horizontal direction.

The actuating device 29 may be electrically, pneumatically or hydraulically driven and may comprise one or more electrically, pneumatically or hydraulically driven actuators.

The strapping unit 20 illustrated in Figs 2a-2i comprises a squeezing device 34 for squeezing the second strap section 7b against the first strap section 7a with the second strap section 7b overlapping the first strap section 7a, wherein the squeezing device 34 is configured to keep the second strap section 7b squeezed against the first strap section 7a during the moment when the welded joint 8 between the first and second strap sections 7a, 7b is formed by the laser welding device 21. In the illustrated example, the squeezing device 34 comprises a squeezing member 35 which is configured to co-operate with the support member 24 and which is moveably mounted to the housing 36 of the strapping unit 20. The first and second strap sections 7a, 7b are receivable in a space between the squeezing member 35 and the support member 24 and the squeezing member 35 is moveable in relation to the support member 24 between a retracted first position (see Figs 2a-2f and 2i), in which the squeezing member 35 is retracted from the support member 24, and an advanced second position (see Figs 2g and 2h), in which the squeezing member 35 is pressed against the support member 24 in order to squeeze together the first and second strap sections 7a, 7b. The squeezing member 35 is provided with a passage 37, through which a laser beam 23 from the laser welding head 22 of the laser welding device 21 may be directed towards an area on the second strap section 7b, in order to form the welded joint 8 between the first and second strap sections 7a, 7b, when the squeezing member 23 is in said second position and keeps the first and second strap sections 7a, 7b squeezed together between the squeezing member 35 and the support member 24. The squeezing member 35 is moveable between said first and second positions by means of an actuator (not shown), which may be electrically, pneumatically or hydraulically driven. The actuator is with advantage a hydraulic cylinder.

The support member 24, the pressing element 27 and the squeezing device 34 may of course also have any other suitable design in addition to the designs illustrated in Figs 2a-2i.

The strapping machine 1 further comprises an electronic control device 60 (very schematically illustrated in Fig 1) for controlling the operation of the strapping machine. The electronic control device 60 is connected to the laser welding device 21 and configured to control the laser welding device to direct and focus the laser beam 23 of the laser welding device onto a desired part of the strap 3. The electronic control device 60 is also connected to the feeding device 5, the actuating device 29 and the actuator of the squeezing device 34 and configured to control the operation thereof.

The strapping machine 1 is adapted for use with a metal strap 3, for instance of steel, coated with a coating material having a vaporizing temperature that is lower than a melting point of the metallic material of the strap. Thus, coating material will vaporize at the welding zone under the formation of gas when the welded joint 8 is formed between the first and second strap sections 7a, 7b by the laser welding device 21. The coating material is for instance an anticorrosive coating material, such as zinc, or a paint.

As illustrated in Fig 2b, the electronic control device 60 is configured to control the laser welding device 21 to direct a laser beam 23 onto the above-mentioned first surface 50 on the first strap section 7a in order to form several laser-produced protuberances 52 (see Figs 3-7) thereon when the first strap section is received in the strapping unit 20 before being fed around the object receiving space 4. Thus, these protuberances 52 are formed on the first strap section 7a during the first passage of the first strap section through the strapping unit 20, and the first strap section 7a is consequently already provided with these protuberances 52 when being fed around the object receiving space 4 and into the strapping unit 20 the second time. The protuberances 52 will keep the first surface 50 on the first strap section 7a and the opposite second surface 51 on the second strap section 7b separated from each other when the second strap section 7b is positioned in an overlapping relationship to the first strap section 7a and squeezed against it after the tightening of the strap around the object or objects 10 to be strapped.

The protuberances 52 will make sure that a small gap 53 (see Fig 7) is maintained between the first and second strap sections 7a, 7b at the welding zone when the second strap section 7b is squeezed against the first strap section 7a by the squeezing member 35. Gas formed by vaporization of coating material on the strap 3 at the interface between the first and second strap sections 7a, 7b during the welding operation will escape through the gap 53 and is thereby prevented from impairing the quality of the welded joint 8.

The electronic control device 60 is with advantage configured to control the feeding device 5 to continuously feed the first strap section 7a forwards through the strapping unit 20 at reduced speed during the formation of the protuberances 52 on said first surface 50 on the first strap section 7a. The feeding speed during the formation of the protuberances 52 is for instance 20-30% of the normal feeding speed used when feeding the strap 3 around the object receiving space 4. The strapping unit 20 may be provided with means for blowing air against the upper side of the first strap section 7a in order to keep it pressed against the support member 24 during the formation of the protuberances 52.

As an alternative, the feeding of the strap 3 may be stopped in order to keep the first strap section 7a still during the formation of the protuberances 52. In the latter case, the first strap section 7a may be squeezed against the support member 24 by the squeezing member 35 during the formation of the protuberances 52.

Each protuberance 52 is formed by making the laser beam 23 locally melt the strap 3 to a depth corresponding to less than half the thickness of the strap, wherein the melted material bulges upwards to form a convexly shaped protuberance. The protuberances 52 may for instance have a height of approximately 0.1-0.3 mm. The protuberances 52 may be formed on said first surface 50 in any suitable shape and pattern. In the example illustrated in Figs 3a and 3b, the protuberances 52 are formed as dots distributed in a dot pattern across the first surface 50. In the example illustrated in Figs 4a and 4b, the protuberances 52 are formed as elongated longer lines arranged in parallel with each other across the first surface 50. In the example illustrated in Fig 5, the protuberances 52 are formed as inclined and elongated shorter lines.

The electronic control device 60 is configured to control the feeding device 5 to stop the feeding of the strap 3 when the first strap section 7a during its second passage over the support member 24 has passed over the recess 25 in the support member. The pressing element 27 and the support member 24 are thereafter moved in relation to each other, by a vertical movement downwards of the pressing element 27 and/or a vertical movement upwards of the support member 24, until the pressing element 27 has been received in the recess 25 and a bulge 30 has been formed on the first strap section 7a. The strap 3 is thereafter retracted in order to draw it tightly around one or more objects 10 positioned in the object receiving space 4 of the strapping unit 20, wherein a part of the second strap section 7b is pressed, under the effect of the tensional force in the strap 3, towards the upper support surface 26 on the support member 24 and tightly against a part of the first strap section 7a. The first strap section 7a is hereby clamped between the support member 24 and the second strap section 7b during the tightening of the strap 3. The positive locking between the bulge 30 and the support member 24 and pressing element 27 will together with the clamping force exerted by the second strap section 7b on the first strap section 7a achieve a gripping and locking effect on the first strap section 7a and keep the first strap section locked to the support member 24 during the tightening of the strap 3. As an alternative, the first strap section 7a could be gripped and locked to the strapping unit 20 in any other suitable and conventional manner during the tightening of the strap 3, i.e. without the use of a pressing element 27 and recess 25 of the type described above.

The electronic control device 60 may be configured to control the laser welding device 21 to direct a laser beam 23 (see Fig 2h) onto an area 14 (see Figs 8, 11 and 13) extending across the strap 3 at the trailing end of the second strap section 7b, i.e. at the end of the second strap section 7b facing the feeding device 5, in order to reduce the tensile strength of the strap 3 at the trailing end of the second strap section 7b, wherein electronic control device 60 is configured to control the feeding device 5 to retract the strap 3 in order to subject said area 14 to tensile stress and thereby cause the strap to be broken off at the trailing end of the second strap section 7b. Hereby, the strap loop 11 arranged around the object or objects 10 to be strapped is released from the remaining part 3b of the strap. As an alternative, the electronic control device 60 may be configured to control the laser welding device 21 to cut off the strap 3 at the trailing end of the second strap section 7b by means of a laser beam 23 which cuts across the strap 3 in the entire thickness thereof, to thereby release the part 3a of the strap fed in a loop around said space 4 from the remaining part 3b of the strap.

The laser welding head 22 may comprise one or more computer-controlled scanning mirrors for controlling the direction and movement of the laser beam 23 emitted from the laser welding head. As an alternative, the direction and movement of the laser beam 23 may be controlled by computer-controlled movements of the entire laser welding head 22. The laser welding head 22 is provided with a focusing lens 38, through which the laser beam 23 leaves the laser welding head.

In the illustrated embodiment, the laser welding device 21 further comprises a laser source 39 (see Fig 2a) for generating the laser power required for producing the laser beam 23 used for forming the above-mentioned protuberances 52, for forming the welded joint 8 between the first and second strap sections 7a, 7b and for releasing the strap loop 11 from the remaining part 3b of the strap. The laser source 39 can be of any type commonly used for welding. In the illustrated example, the laser source 39 is connected to the laser welding head 22 via an optical fibre cable 40, which is configured to guide the laser power generated by the laser source 39 to the laser welding head 22. The optical fibre cable 40 is in a conventional manner connected to the laser welding head 22 by means of an optical connector 41 comprising focusing optics. The focal point of the laser beam 23 emitted from the laser welding head 22 may be adjusted by computer-controlled movements of one or more optical members included in the focusing optics of the optical connector 41.

The electronic control device 60 may be configured to control the laser welding device 21 to reduce the tensile strength of the strap 3 at the trailing end of the second strap section 7b by heating the above-mentioned area 14 at the trailing end of the second strap section 7b under the effect of said laser beam 23 and without cutting or penetrating into the strap 3. In order to heat the area 14 at the trailing end of the second strap section 7b, the laser welding device 21 is made to sweep the laser beam 23 over the area 14 (schematically illustrated with dotted lines in Fig 8), which extends between the longitudinal edges 17a, 17b of the strap 3. In order to make sure that the laser beam 23 will heat the area 14 in question without cutting into the strap 3, the focal point of the laser beam 23 is adjusted, for instance by means of the above-mentioned focusing optics of the optical connector 41, in such a manner that the laser beam is out of focus when hitting the area 14 at the trailing end of the second strap section 7b. When the area 14 has been rapidly heated by the laser beam 23, the feeding device 5 is operated to pull the strap 3 backwards with such a force that the strap 3, under the effect of the tensile stress produced in the strap between the feeding device 5 and the second strap section 7b, is broken off at the heated area 14.

As an alternative, the electronic control device 60 may be configured to control the laser welding device 21 to reduce the tensile strength of the strap 3 at the trailing end of the second strap section 7b by forming one or more depressions 18, 18' (see Figs 11-14) across the strap 3 at the trailing end of the second strap section 7b under the effect of the laser beam 23 so as to thereby provide a break line 19 across the strap 3 at the trailing end of the second strap section 7b. In this case, the laser beam 23 is made to cut into the strap 3, but without cutting through it. The depressions 18, 18' may for instance have a depth corresponding to approximately half the thickness of the strap 3. The laser beam 23 is preferably prevented from reaching any of the longitudinal edges 17a, 17b of the strap 3 when forming the depressions 18, 18'. The break line 19 may be formed by several shorter depressions 18 arranged in line with each other across the strap 3 at the trailing end of the second strap section 7b, as illustrated in Figs 11 and 12, or by one longer depression 18' extending across the strap 3 at the trailing end of the second strap section 7b, as illustrated in Figs 13 and 14. When the break line 19 has been formed by the laser beam 23, the feeding device 5 is operated to pull the strap 3 backwards with such a force that the strap 3, under the effect of the tensile stress produced in the strap between the feeding device 5 and the second strap section 7b, is broken off at the break line 19.

The electronic control device 60 may be implemented by one single electronic control unit or by two or more mutually cooperating electronic control units.

An operating sequence for securing a strap 3 in a loop around a bundle of objects 10 by means of the above-described strapping machine 1 will now be described with reference to Figs 2a-2i.

In a first step, a motor of the feeding device 5 is operated in a first direction in order to feed the strap 3 forwards from the supply coil 6 and thereby move the first strap section 7a at the leading end of the strap into the strapping unit 20. The laser welding device 21 is then operated to focus a laser beam 23 onto a first surface 50 on the first strap section 7a in order to form a pattern of protuberances 52 on this surface, as illustrated in Fig 2b. Thereafter, the feeding device 5 is made to feed the strap 3 forwards through the strapping unit 20, in a loop around the object receiving space 4 of the strapping machine 1 and then back into the strapping unit 20. The leading end 12 of the strap is first moved over the support member 24 and the pressing element 27, thereafter in a loop around the object receiving space 4 and then into a space between the pressing element 27 and the recess 25 in the support surface 26 on the support member 24, wherein the feeding of the strap 3 is stopped when the leading end 12 of the strap has passed over said recess 25.

During the feeding of the strap 3, the squeezing member 35 is in its retracted first position.

In the illustrated example, the pressing element 27 is positioned in the recess 25 in the support member 24 before the initial feeding of the leading end 12 of the strap through the strapping unit 20 and maintained in the recess 25 until the leading end 12 of the strap has passed over the upper surface 28 on the pressing element 27 and the upper support surface 26 on the support member 24, as illustrated in Figs 2a and 2b. The actuating device 29 thereafter effects a relative movement between the pressing element 27 and the support member 24 in order to cause the pressing element 27 to be positioned at a distance from the recess 25 in the support member 24, wherein the strap 3 is lifted by the pressing element 27 from the upper support surface 26 on the support member 24, as illustrated in Fig 2c.

When the strap 3 has been fed through the guide track 2 in a loop around the object receiving space 4, the leading end 12 of the strap 3 will leave the guide track 2 and pass through the gap between the pressing element 27 and the support member 24 (see Fig 2d), whereupon the leading end 12 of the strap 3 actuates a stop member (not shown) and the motor of the feeding device 5 is stopped. The actuating device 29 thereafter effects a relative movement between the pressing element 27 and the support member 24 in order to cause the pressing element 27 to be received in the recess 25 (see Fig 2e) and thereby form a bulge 30 on the first strap section 7a. Thereafter, the motor of the feeding device 5 is reversed in order to pull the strap 3 backwards and thereby tighten the strap 3 around the objects 10 received in the object receiving space 4, as illustrated in Fig 2f. As illustrated in Figs 2e and 2f, the strapping unit 20 and the guide track 2 are moveable in relation to the objects 10 and configured to move towards the objects 10 when the strap 3 is tightened around the objects.

When the strap 3 has been drawn tightly around the objects 10, the motor of the feeding device 5 is stopped and the squeezing member 35 is moved to its advanced second position in order to squeeze together the first and second strap sections 7a, 7b between the squeezing member 35 and the support member 24 (see Fig 2g), wherein the protuberances 52 on the first strap section 7a make sure that a small gap 53 is maintained between the opposed surfaces 50, 51 of the first and second strap sections 7a, 7b at the intended welding zone. The laser welding device 21 is then operated to focus a laser beam 23 onto the mutually overlapping strap sections 7a, 7b in order to form a welded joint 8 between the strap sections 7a, 7b, wherein the laser beam 23 is directed onto an area on the second strap section 7b above said gap 53. The strap 3 is thereby secured in a loop around the objects 10. Thereafter, the laser welding device 21 is operated to direct a laser beam 23 onto an area 14 across the strap 3 at the trailing end of the second strap section 7b in order to reduce the tensile strength of the strap 3 at the trailing end of the second strap section 7b, as illustrated in Fig 2h. The part of the strap extending between the squeezing member 35 and the feeding device 5 is with advantage held in a slacked state during the moment when the laser beam 23 is directed onto said area 14. Thereafter, the feeding device 5 is configured to retract the strap 3 in order to subject said area 14 to tensile stress and thereby cause the strap to be broken off at the trailing end of the second strap section 7b. Finally, the squeezing member 35 is returned to its retracted first position and the pressing element 27 and support member 24 are removed from the first strap section 7a in order to release the strap loop 11 from the strapping unit 20.

The invention is of course not in any way restricted to the embodiments described above. On the contrary, many possibilities to modifications thereof will be apparent to a person with ordinary skill in the art without departing from the basic idea of the invention such as defined in the appended claims. The strapping machine according to the present invention may for instance be design for co-operation with a compacting machine in order to strap a coil of wire compacted by the compacting machine. In the latter case, several strapping units are mounted to the compacting machine and used simultaneously in order to apply strap loops at different positions around the compacted coil of wire, wherein each strap loop extends along the inside of the coil through a central axial opening therein and along the outside of the coil.

## Claims

1. A strapping machine for securing a piece (3a) of metal strap in a loop (11) around one or more objects, the strapping machine (1) comprising:
- a strapping unit (20) provided with a laser welding device (21) for forming a welded joint (8) between a first strap section (7a) at a leading end of a piece (3a) of metal strap arranged in a loop around one or more objects (10) to be strapped and an overlapping second strap section (7b) at a trailing end of said strap piece (3a) to thereby secure this strap piece (3a) in a loop around said one or more objects (10) with a first surface (50) on the first strap section (7a) facing an opposite second surface (51) on the second strap section (7b) at the welding zone;
- a feeding device (5) for feeding the strap (3) through the strapping unit (20), in a loop around an object receiving space (4) configured for receiving one or more objects (10) to be strapped and then back into the strapping unit (20) and subsequently retracting the strap (3) to draw it tightly around one or more objects (10) received in the object receiving space (4); and
- an electronic control device (60),
**characterized in that** the electronic control device (60) is configured to control the laser welding device (21) to direct a laser beam (23) onto said first surface (50) when the first strap section (7a) is received in the strapping unit (20) before being fed around the object receiving space (4) so as to form several laser-produced protuberances (52) on the first surface (50) that will keep the first and second surfaces (50, 51) separated from each other when the second strap section (7b) is positioned in an overlapping relationship to the first strap section (7a) after the feeding of the strap (3) around the object receiving space (4).

2. A strapping machine according to claim 1, **characterized in that** the strapping machine (1) comprises a squeezing device (34) for squeezing the second strap section (7b) against the first strap section (7a) with the second strap section (7b) overlapping the first strap section (7a), wherein the electronic control device (60) is configured to control the squeezing device (34) to keep the second strap section (7b) squeezed against the first strap section (7a) during the moment when the welded joint (8) between the first and second strap sections (7a, 7b) is formed by the laser welding device (21).

3. A strapping machine according to claim 2, **characterized in:**
- **that** the strapping machine (1) comprises a support member (24) for supporting the first strap section (7a);
- **that** the squeezing device (34) comprises a squeezing member (35) which is configured to co-operate with the support member (24), wherein the first and second strap sections (7a, 7b) are receivable in a space between the squeezing member (35) and the support member (24) and wherein the squeezing member (35) is moveable in relation to the support member (24) between a retracted first position, in which the squeezing member (35) is retracted from the support member (24), and an advanced second position, in which the squeezing member (35) is pressed against the support member (24) in order to squeeze together the first and second strap sections (7a, 7b); and
- **that** the squeezing member (35) is provided with a passage (37), through which a laser beam (23) from a laser welding head (22) of the laser welding device (21) may be directed towards an area on the second strap section (7b) when the squeezing member (35) is in said second position and keeps the first and second strap sections (7a, 7b) squeezed together between the squeezing member (35) and the support member (24).

4. A strapping machine according to any of claims 1-3, **characterized in that** the electronic control device (60) is configured to control the feeding device (5) to continuously feed the first strap section (7a) forwards through the strapping unit (20) during the formation of the protuberances (52) on said first surface (50).

5. A method for securing a piece (3a) of coated metal strap in a loop (11) around one or more objects, the method comprising the consecutive steps of:
- feeding a first strap section (7a) at the leading end of the strap (3) into a strapping unit (20) of a strapping machine (1) and forming several protuberances (52) on a first surface (50) on this first strap section (7a) by means of a laser beam (23) from a laser welding device (21) included in the strapping unit (20);
- feeding the strap (3) forwards so as to make the first strap section (7a) move through the strapping unit (20), thereafter in a loop around an object receiving space (4) of the strapping machine (1) and then back into the strapping unit (20);
- gripping the first strap section (7a) so as to lock it to the strapping unit (20);
- retracting the strap (3) to draw it tightly around one or more objects (10) positioned in said object receiving space (4);
- squeezing a second strap section (7b), at the trailing end of the piece (3a) of strap drawn tightly around said one or more objects (10), against the first strap section (7a) with said first surface (50) on the first strap section (7a) facing an opposite second surface (51) on the second strap section (7b), wherein said protuberances (52) on the first surface (50) keep the first and second surfaces (50, 51) separated from each other and thereby ensure that a gap (53) is formed between these surfaces (50, 51) when the second strap section (7b) is squeezed against the first strap section (7a); and
- directing a laser beam (23) from the laser welding device (21) onto an area on the second strap section (7b) above said gap (53) in order to form a welded joint (8) between the first and second strap sections (7a, 7b) and thereby secure said strap piece (3a) in a loop (11) around said one or more objects (10).

6. A method according to claim 5, **characterized in that** the first strap section (7a) is continuously fed forwards through the strapping unit (20) during the formation of the protuberances (52) on said first surface (50).

7. A method according to claim 5 or 6, **characterized in that** each protuberance (52) is formed by making the laser beam (23) locally melt the strap (3) to a depth corresponding to less than half the thickness of the strap (3), wherein the melted material bulges upwards to form a convexly shaped protuberance.

8. A method according to any of claims 5-7, **characterized in that** the protuberances (52) are formed as dots.

9. A method according to any of claims 5-7, **characterized in that** the protuberances (52) are formed as elongated lines.

10. A method according to any of claims 5-9, **characterized in that** the strap (3) is coated with a coating material having a vaporizing temperature that is lower than a melting point of the metallic material of the strap.

11. A method according to claim 10, **characterized in that** the coating material is an anticorrosive coating material, such as zinc.

12. A method according to claim 10, **characterized in that** the coating material is a paint.
